# EUROPEAN PATENT APPLICATION

(11) **EP 4 813 625 A1**
(43) Date of publication of application: **30.09.2026**
(21) Application number: 26165677.1
(22) Date of filing: 18.03.2026
(51) Int. Cl.: B32B 5/02, B32B 5/08, B32B 5/26

(54) **THERMAL INSULATION SHEET AND METHOD FOR PREPARING THERMAL INSULATION SHEET**

(30) Priority: 28.03.2025 CN 202510381475
(71) Applicant: 3M Innovative Properties Co., St. Paul, MN 55133-3427 (US)
(72) Inventor: You, Jin Zhang, Shanghai (CN); Pan, Jie, Shanghai (CN); Wang, Xiao Rong, Shanghai (CN); Gu, Shaoqing, Shanghai (CN)
(74) Representative: Mathys & Squire

(57) **Abstract**

The present invention provides a thermal insulation sheet, and a method for preparing the thermal insulation sheet. Specifically, the thermal insulation sheet comprises a laminate of a plurality of sequentially stacked fiber layers, wherein: each of the plurality of fiber layers comprises an inorganic fiber, an adhesive fiber, and an inorganic filler particle, the adhesive fiber being melted so as to bond the inorganic fiber and the inorganic filler particle; and the thermal insulation sheet comprises a plurality of punching fixing portions penetrating through the thermal insulation sheet in a direction substantially perpendicular to a plane of the thermal insulation sheet. According to the technical solutions of the present invention, a thermal insulation sheet having good compression resilience properties, thermal insulation properties, and mechanical properties (e.g., tensile strength) can be provided.

## Description

### Technical Field

The present invention relates to the technical field of battery insulation materials, and specifically relates to a thermal insulation sheet and a method for preparing the thermal insulation sheet.

### Background

In a battery construction system, thermal insulation materials play a crucial role. The battery will generate heat during charging and discharging, and if the heat cannot be effectively managed, this may cause a decline in battery performance. Thermal insulation materials act like a protective wall for the battery, preventing excessive heat transfer and accumulation. When a local temperature of the battery is overly high, the thermal insulation material can prevent the heat from spreading to other battery cells, avoiding thermal runaway. Once thermal runaway occurs, the thermal runaway can not only lead to serious safety accidents such as battery fire and explosion, but can also significantly shorten the overall life of the battery pack. Therefore, providing thermal insulation materials in batteries is a key step to ensure the safe and stable operation of the batteries, extend service life and improve overall performance, and has indispensable significance for widespread application of batteries in various devices, especially in energy storage systems.

In particular, with the rapid development of the electric vehicle market, the safety of lithium-ion batteries, a core energy component of electric vehicles, has become a key concern. Thermal runaway is a serious safety threat during the use of lithium-ion batteries, which may cause the batteries to catch fire or even explode, posing a huge risk to personal safety and vehicles.

In a battery module, individual battery cells will expand during charging, especially during fast charging (1.5C), when the expansion is more pronounced. This expansion may cause deformation of the internal structure of the battery module, affecting battery performance, and even causing safety issues such as battery short circuits. Therefore, it is of great significance to provide thermal insulation sheets between battery cells, which can prevent spread of thermal runaway within the battery module, and need to have good compressibility, resilience and mechanical strength, to accommodate battery expansion and provide structural support.

Currently, most high-insulation filler thermal insulation sheets used between batteries are made of inorganic fibers, adhesives or bicomponent fibers, and nanoparticle fillers. These components are fully mixed to form a fiber web. However, this structure has many problems. For example, adhesives, bicomponent fibers, or other binders are used to bond nanoparticles and inorganic components into a single unit, but this ultimately results in thermal insulation sheets that perform poorly in terms of compression and elasticity, and have low mechanical strength. In particular, fiber webs are formed by gravity, and fumed silica tends to agglomerate, resulting in uneven density distribution. This renders fiber webs difficult to compress during assembly, and results in poor resilience.

In summary, existing thermal insulation sheet technologies are insufficient to meet the high performance requirements thermal insulation materials for batteries. The present invention is intended to provide a thermal insulation sheet having good compressibility, resilience, mechanical properties and thermal insulation properties, as well as a preparation method, to compensate for the deficiencies in the prior art, and improve battery safety and performance.

### Summary

Starting from the technical problems described above, one of objectives of the present invention is to provide a thermal insulation sheet, and a method for preparing the thermal insulation sheet. According to the technical solutions of the present invention, a thermal insulation sheet having good compression resilience properties, thermal insulation properties, and mechanical properties (e.g., tensile strength) can be provided.

Specifically, according to one aspect of the present invention, a thermal insulation sheet is provided, the thermal insulation sheet including a laminate of a plurality of sequentially stacked fiber layers, wherein:
Each of the plurality of fiber layers comprises an inorganic fiber, an adhesive fiber, and an inorganic filler particle, the adhesive fiber being melted so as to bond the inorganic fiber and the inorganic filler particle; and
The thermal insulation sheet comprises a plurality of punched fixing portions penetrating through the thermal insulation sheet in a direction substantially perpendicular to a plane of the thermal insulation sheet.

"Laminate" in the present application means a collection of two or more discrete fiber layers stacked in sequence along the sheet thickness. A laminate does not require any adhesive or binder between adjacent fiber layers. However, interlayer bonding (e.g., from melted adhesive fibers or punching) may be present or absent. Optional encapsulation films/fabrics, if present, are not part of the laminate. According to another aspect of the present invention, a method for preparing a thermal insulation sheet is provided, the method comprising the following steps:
(1) Mixing, opening, and combing an inorganic fiber and an adhesive fiber, to form a fiber layer;
(2) Uniformly spraying an inorganic filler particle onto an upper surface of the fiber layer, to obtain a fiber layer loaded with the inorganic filler particle;
(3) Subjecting a plurality of the fiber layers loaded with the inorganic filler particle to cross-lapping treatment, to form a laminate;
(4) Subjecting the laminate to punching treatment, to form a punched and fixed laminate; and
(5) Subjecting the punched and fixed laminate to heat treatment, to melt the adhesive fiber.

### Brief Description of Drawings

The accompanying drawing is provided in this description to more clearly explain the technical solutions of the present invention; however, the art is not limited thereto.

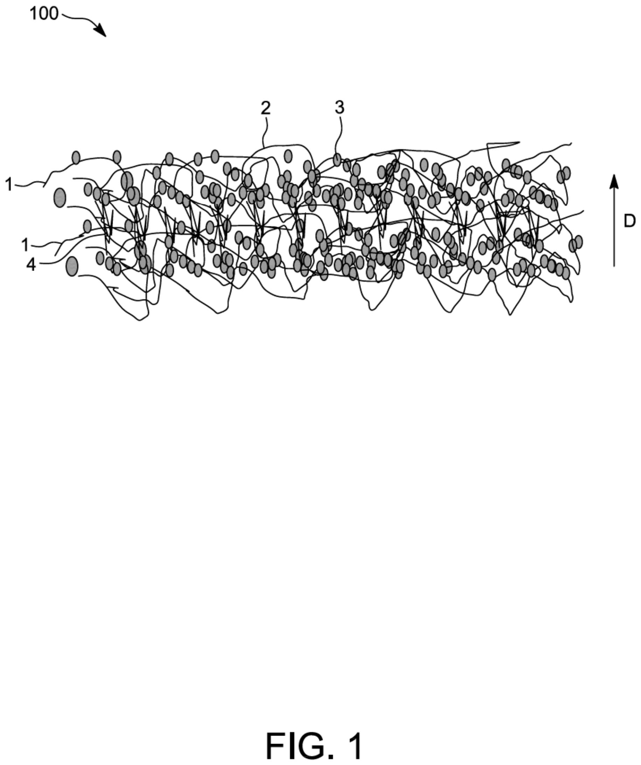

FIG. 1 shows a schematic diagram of a thermal insulation sheet for a battery having a double-layer structure according to a specific embodiment of the present invention.

### Detailed Description

The present invention will be described in further detail with reference to the accompanying drawing and specific embodiments. It will be appreciated that other embodiments are considered, and can be practiced without departing from the scope and spirit of the present invention. Therefore, the following detailed description is non-limiting.

Unless otherwise indicated, all numbers used in the description and claims for the dimensions, quantities, and physicochemical properties of features should be construed to be modified by the term "approximately" in all instances. Accordingly, unless indicated to the contrary, the above numerical parameters listed in the description and attached claims are all approximations, which can be properly altered by a person skilled in the art using desired properties sought to be obtained from the teachings disclosed herein. The use of numerical ranges indicated by endpoints includes all numbers within that range and any range within that range, for example, 1 to 5 includes 1, 1.1, 1.3, 1.5, 2, 2.75, 3, 3.80, 4, and 5, etc.

As described above, the present invention focuses on the field of battery thermal insulation, aiming to provide a thermal insulation sheet having good compressibility, resilience, mechanical properties and thermal insulation properties, and a preparation method therefor, so as to meet thermal management and structural stability requirements of battery cells in battery modules, and ensure safe and efficient operation of battery systems.

Specifically, according to one aspect of the present invention, a thermal insulation sheet is provided, the thermal insulation sheet including a laminate of a plurality of sequentially stacked fiber layers, wherein:
Each of the plurality of fiber layers comprises an inorganic fiber, an adhesive fiber, and an inorganic filler particle, the adhesive fiber being melted so as to bond the inorganic fiber and the inorganic filler particle; and
The thermal insulation sheet comprises a plurality of punched fixing portions penetrating through the thermal insulation sheet in a direction substantially perpendicular to a plane of the thermal insulation sheet.

Specifically, FIG. 1 shows a schematic diagram of a thermal insulation sheet 100 for a battery having a double-layer structure according to a specific embodiment of the present invention. As shown in FIG. 1, the thermal insulation sheet 100 comprises a laminate of two fiber layers 1 sequentially stacked. Each of the two fiber layers 1 comprises an inorganic fiber 2, an adhesive fiber (not shown, because the adhesive fiber is melted and has no fixed shape), and an inorganic filler particle 3; The thermal insulation sheet 100 comprises a plurality of punched fixing portions 4 penetrating through the thermal insulation sheet 100 in a direction D that is substantially perpendicular to a plane of the thermal insulation sheet 100.

In the thermal insulation sheet involved in the present invention, the term "substantially" in the statement that "the thermal insulation sheet comprises a plurality of punched fixing portions penetrating through the thermal insulation sheet in a direction substantially perpendicular to a plane of the thermal insulation sheet" has a clear meaning. The term does not require that the punched fixing portions be absolutely perpendicular to the plane of the thermal insulation sheet, but rather refers to an approximately perpendicular state. Specifically, the punched fixing portion is at an angle of 80-100° to the plane of the thermal insulation sheet, with a preferred angle range being 85-100° or 85-95°. In one aspect, punching at this angle allows for more proper fiber movement and rearrangement, resulting in a more stable fiber orientation perpendicular to the plane of the thermal insulation sheet. The fibers, like closely arranged and stable support columns, enhance the compressive strength of the thermal insulation sheet. In another aspect, bonding effects between adjacent fiber layers are also better, reducing a risk of interlayer separation, and enabling the thermal insulation sheet to function as a whole when subjected to external forces, thereby effectively improving mechanical properties thereof, such as tensile strength.

According to some preferred embodiments of the present invention, one or more of glass fiber, ceramic fiber, alumina fiber and basalt fiber is selected as an inorganic fiber raw material. The inorganic fiber has a length range of 30-100 mm, preferably 50-100 mm, more preferably 60-100 mm, and most preferably 50-60 mm. This length range is conducive to combing, so that the fibers are more evenly distributed in the fiber layers and form a stable fiber network structure. The diameter of the fiber is 3-15 µm, preferably 3-10 µm. An appropriate diameter helps to improve the flexibility and filling properties of the fiber layer while ensuring mechanical strength. Based on the total weight of the thermal insulation sheet being 100%, the content of the inorganic fiber is 20-77% by weight, more preferably 30-70% by weight. When the content of the inorganic fiber is lower than 20% by weight, the fiber network structure is loose, and cannot provide sufficient support and resilience, resulting in poor resilience of the thermal insulation sheet. When the content is higher than 77% by weight, there are excessive inorganic fibers, affecting filling of the thermal insulation filler and reducing thermal insulation properties. Specific examples of inorganic fibers that can be used in the present invention include: S-glass fiber, S-glass fiber and S-2 glass fiber, available from Advanced Glass Fiber Yarns LLC; R-glass fiber, available from Saint-Gobain Vitotex; and TCR635B-11-52, available from Taishan Fiberglass Co., Ltd.

According to some preferred embodiments of the present invention, a low-melting-point fiber is used as the adhesive fiber, the melting point of the low-melting-point fiber being in a range of 100-250°C, preferably 100-150°C. Suitable polymer binder materials that can be used as the low-melting-point fiber include thermoplastic polymers. Preferably, the low-melting-point fiber is a low-melting-point thermoplastic polymer fiber. The thermoplastic polymer is selected from a polyolefin, a polyamide, a polyester, a vinyl acetate-ethylene copolymer, and a vinyl ester-ethylene copolymer. Examples of suitable thermoplastic polymer fibers include polyolefin fibers (e.g., polyethylene or polypropylene), polystyrene fibers, polyether fibers, polyester fibers (e.g., polyethylene terephthalate (PET) or polybutylene terephthalate (PBT)), vinyl polymer fibers (e.g., polyvinyl chloride and polyvinylidene fluoride), and polyamides (e.g., polycaprolactam, polyurethane, nylon fibers, and polyaramid fibers). Particularly effective adhesive fibers for thermal adhesion may further include so-called bicomponent adhesive fibers, which typically include bicomponent polymers having different compositions or different physical properties. Typically, such fibers are core/sheath fibers, where, for example, a polymer component of the core has a higher melting point and provides mechanical strength, while the sheath has a lower melting point to achieve adhesion (e.g., melt adhesion). Preferably, the bicomponent adhesive fiber may be a core/sheath polyester/polyolefin fiber.

At a specific heat treatment temperature, the low-melting-point fiber can melt and bond the inorganic fiber and the inorganic filler particle, to form a stable structure. The adhesive fiber has a diameter of 10-50 µm, and a length range of 20-50 mm. Fiber length may be measured by optical microscopy. A representative portion of the inorganic fibers is gently dispersed to separate individual filaments and placed onto a glass slide. The sample is imaged using a calibrated optical microscope at an appropriate magnification to clearly resolve fiber endpoints. Digital images are captured, and the lengths of at least 50-100 individual fibers are measured using image-analysis software. The reported fiber length corresponds to the arithmetic average of the measured fibers. Based on the total weight of the thermal insulation sheet being 100%, the content of the adhesive fiber is 3-20% by weight, more preferably 8-10% by weight. When the content is lower than 3% by weight, the fiber layer structure is loose, and the inorganic filler particle easily sheds, affecting the integrity and performance of the thermal insulation sheet. When the content is higher than 20% by weight, the resilience and thermal insulation properties of the thermal insulation sheet will be reduced due to excessive adhesive fibers occupying space, reducing a filling amount of the inorganic filler particle, and affecting an elastic recovery capability of the fiber layer. Specific examples of adhesive fibers that can be used in the present invention include: ES2080 and ES4080, manufactured by Huvis.

According to some preferred embodiments of the present invention, the inorganic filler particle may be selected from one or more of fumed silica, aerogel silica, precipitated silica, and glass microspheres. The inorganic filler particle has a particle size of 5-50 µm, preferably 7-40 µm. Particle size may be measured by laser diffraction. A representative sample of the inorganic filler particles is dispersed in air or in a liquid medium, as appropriate for the material, to achieve adequate de-agglomeration. The dispersed sample is introduced into a laser-diffraction particle-size analyzer, and the instrument records the angular distribution of scattered light. Particle-size values are calculated using the instrument's software based on Mie or Fraunhofer optical models. The reported particle-size value corresponds to the volume-based median diameter (D50.) An appropriate particle size facilitates even dispersion in the fiber layer, improving thermal insulation effects. The inorganic filler particle has a specific surface area of 50-500 g/m², preferably 50-400 g/m². This high specific surface area characteristic provides the inorganic filler particle with good thermal insulation properties, and allows effective prevention of heat transfer. Based on the total weight of the thermal insulation sheet being 100%, the content of the inorganic filler particle is 20-60% by weight. When the content is lower than 20% by weight, the thermal insulation properties cannot meet requirements, and heat spreads easily in the battery module. When the content is higher than 60% by weight, the inorganic filler particle is difficult to firmly bond to the fiber layer and sheds easily, and can also reduce the mechanical properties of the thermal insulation sheet, rendering the thermal insulation sheet easily damaged during use. In every two adjacent fiber layers of the plurality of fiber layers, the concentration of the inorganic filler particle gradually decreases from an interface between the two adjacent fiber layers toward the interiors of the two adjacent fiber layers. This distribution helps to form a high thermal insulation layer on the surface while ensuring the stability of the internal structure of the fiber layers. Additionally, based on to a cross-lapping process for preparing the thermal insulation sheet of the present invention, theoretically there are almost no inorganic filler particles on exposed surfaces of outermost upper and lower fiber layers of the thermal insulation sheet. However, a subsequent punching treatment process may carry a small amount of inorganic filler particles onto the exposed surfaces of the outermost upper and lower fiber layers of the thermal insulation sheet.

According to some preferred embodiments of the present invention, in the multilayer fiber structure, the adhesive fiber inside each fiber layer will melt during heat treatment, bonding the inorganic fiber and the inorganic filler particle of the same layer, to form a stable fiber-filler composite structure. Optionally, at a boundary between two adjacent fiber layers, the adhesive fiber in one fiber layer also melts and bonds with the inorganic fiber and the inorganic filler particle in the other fiber layer, thereby tightly binding the plurality of fiber layers together, and enhancing the overall integrity and structural strength of the entire thermal insulation sheet.

According to some preferred embodiments of the present invention, the thermal insulation sheet is provided with a plurality of punching fixing portions penetrating through the thermal insulation sheet in a direction perpendicular to a plane thereof, and the density of the punching fixing portions is 300-900 per cm². The punching density has a significant impact on the performance of the thermal insulation sheet. When the density is lower than 300 per cm², connection between the fiber layers is not sufficiently tight, and mechanical properties (such as tensile strength) are too low, which cannot meet mechanical requirements of the battery module during use, and can easily cause the thermal insulation sheet to crack or be damaged. When the density is greater than 900 per cm², the punching process can cause excessive damage to the fiber layer, resulting in excessive leakage of the inorganic filler particle, consequently reducing the thermal insulation properties and failing to effectively prevent heat transfer. The punched fixing portions are evenly distributed in the thermal insulation sheet, forming a stable reinforcement structure.

According to some preferred embodiments of the present invention, the diameter of needles used to form the punched fixing portions is in a range of 0.4-2 mm, preferably 0.5-1 mm. An appropriate needle diameter can effectively penetrate the fiber layer without damaging the fiber and filler structure, causing the fibers to entangle with each other. During the punching process, insertion and withdrawal of the needles will cause the fibers in the fiber layer to move and rearrange, forming a fiber orientation perpendicular to the plane of the thermal insulation sheet. These vertically oriented fibers, like support columns, provide additional support for the thermal insulation sheet, and enhance compression resilience properties thereof. Furthermore, the punched fixing portions further strengthen connection between adjacent fiber layers, prevent interlayer separation, and improve the overall mechanical strength of the thermal insulation sheet.

According to some preferred embodiments of the present invention, the thermal insulation sheet further comprises an organic encapsulation layer and/or an inorganic encapsulation layer encapsulating the laminate. The material of the organic encapsulation layer may be selected from one or more of a polyethylene terephthalate (PET) layer or a polytetrafluoroethylene (PTFE) layer. A PET film has good mechanical properties, chemical stability and insulation properties, and can provide additional protection and support for the thermal insulation sheet. A PTFE film has excellent properties such as high temperature resistance, corrosion resistance and a low coefficient of friction, and can further enhance performance of the thermal insulation sheet in complex environments. The thickness of the organic encapsulation layer is 15-100 µm. An appropriate thickness can effectively protect the internal fiber layer structure without excessively increasing the overall thickness and weight of the thermal insulation sheet, thus affecting space utilization and energy density of the battery module.

According to some preferred embodiments of the present invention, the thermal insulation sheet may optionally be provided with an inorganic encapsulation layer. The inorganic encapsulation layer may be made of a material such as glass fiber cloth, basalt fiber cloth, or ceramic fiber cloth. These inorganic fiber cloths have high strength, high temperature resistance and good thermal insulation properties, which can enhance overall mechanical strength and thermal insulation effects of the thermal insulation sheet, and prevent external factors from damaging the internal fiber layers and filler. The thickness of the inorganic encapsulation layer is 30-300 µm. The thickness should be adjusted according to specific application scenarios and performance requirements, to achieve the best protection and thermal insulation effects.

According to another aspect of the present invention, a method for preparing a thermal insulation sheet is provided, the method comprising the following steps:
(1) Mixing, opening, and combing an inorganic fiber and an adhesive fiber, to form a fiber layer;
(2) Uniformly spraying an inorganic filler particle onto an upper surface of the fiber layer, to obtain a fiber layer loaded with the inorganic filler particle;
(3) Subjecting a plurality of the fiber layers loaded with the inorganic filler particle to cross-lapping treatment, to form a laminate;
(4) Subjecting the laminate to punching treatment, to form a punched and fixed laminate; and
(5) Subjecting the punched and fixed laminate to heat treatment, to melt the adhesive fiber.

According to some preferred embodiments of the present invention, the selected inorganic fiber and adhesive fiber are first mixed in a predetermined ratio. The mixing process ensures that the two fibers are mixed evenly, laying a foundation for subsequent formation of a uniform fiber layer. After mixing, an opening operation is performed to disperse fiber bundles into single fibers, increasing the bulkiness and softness of the fibers, which is conducive to subsequent combing and fiber layer formation.

The opened fiber mixture is combed by means of a combing device. The combing process further straightens and arranges the fibers into thin monofilaments. During the combing process, the fibers gradually form an interwoven distribution. The areal density of the combed fiber layer is controlled at 10-20 g/m². This areal density range helps to form a fiber layer having uniform thickness and stable structure, while ensuring that the fiber layer has a certain strength and flexibility, and can support the inorganic filler particle added later.

Subsequently, the inorganic filler particle is evenly sprayed onto the surface of the combed fiber layer. The spraying process needs to ensure that the particles are evenly distributed on the surface of the fiber layer, to avoid local accumulation or voids. The amount of the inorganic filler particle added is precisely controlled according to a predetermined composition ratio of the thermal insulation sheet, to achieve required thermal insulation performance.

Immediately after the particle is sprayed, negative pressure is applied to a lower surface of the fiber layer. The negative pressure effect allows the inorganic filler particle to penetrate deeper into gaps of the fiber layer, driven by a pressure differential, thus achieving uniform loading. The negative pressure adsorption process helps to improve a filling rate and distribution uniformity of the inorganic filler particle in the fiber layer, thereby enhancing thermal insulation properties of the thermal insulation sheet. Furthermore, the negative pressure adsorption can reduce the risk of the inorganic filler particle shedding in subsequent operations, ensuring quality stability of the thermal insulation sheet.

In the cross-lapping process, the fiber layer loaded with the inorganic filler particle is transported to a cross-lapping machine by using a clamping device. On the cross-lapping machine, a plurality of fiber layers are cross-lapped according to a predetermined angle and sequence, to form a laminate having a multi-layered structure. The cross-lapping process allows for precise control of a lapping angle and position of each fiber layer, enabling the fiber layers to interweave and form a complex three-dimensional network structure, thereby enhancing the overall strength and stability of the thermal insulation sheet.

By adjusting the number of fiber layers and the areal density of each layer during the cross-lapping process, the weight and thickness of the final insulation sheet can be precisely controlled. Depending on specific application requirements, the basis weight of the thermal insulation sheet can be controlled within a specific range. For example, in some embodiments, the basis weight may be adjusted between 300-900 g/cm², preferably 300-600 g/cm². The thickness is controlled between 0.5 mm and 5.0 mm, to ensure that the thermal insulation sheet can meet thermal insulation property requirements and adapt to space constraints of the battery module.

According to some preferred embodiments of the present invention, the thermal insulation sheet includes a laminate of 2-30, preferably 5-10, fiber layers sequentially stacked.

According to some preferred embodiments of the invention, there is no adhesive between adjacent fiber layers in the plurality of sequentially stacked fiber layers.

According to some preferred embodiments of the present invention, the laminate formed by cross-lapping is then subjected to preliminary punching treatment. A finer needle is used during the preliminary punching, to perform initial punching on the laminate at a lower punching density. The purpose of the preliminary punching is to initially fix relative positions between the fiber layers, to prevent interlayer displacement during subsequent operations, and to allow the inorganic filler particle to be further compacted and evenly distributed within the fiber layers. During the preliminary punching process, the insertion of the needles causes the fibers in the fiber layer to begin to entangle with each other, initially producing a certain structural strength. Subsequently, primary punching treatment is performed based on the preliminary punching. A needle having an appropriate diameter and length is used during primary punching, to perform punching on the laminate at a high punching frequency and density. During the primary punching process, frequent insertion and withdrawal of the needle causes the fibers between the fiber layers to become fully entangled, forming a tighter and more stable structure. Furthermore, the punching process locks the inorganic filler particle more firmly into the fiber layers, preventing the inorganic filler particle from falling off during use. After primary punching, the density of the punched fixing portions of the thermal insulation sheet reaches 300-900 per cm², ensuring that the thermal insulation sheet has good mechanical properties and compression resilience properties.

In a subsequent process, the punched laminate is subjected to heat treatment. A heat treatment temperature is selected based on the melting point of the adhesive fiber, generally between 100-250°C, preferably 100-150°C. Melting point is measured by differential scanning calorimetry (DSC.) During the heat treatment process, the adhesive fibers melt, flow, and fill gaps between the inorganic fibers and the inorganic filler particles, and solidify after cooling, firmly bonding the inorganic fibers and the inorganic filler particles together to form an integral structure. Heat treatment time is adjusted according to the thickness and composition of the thermal insulation sheet, to ensure that the adhesive fibers are fully melted and the bonding process is completed, while avoiding overheating that could damage material properties.

Preferably, the heat-treated laminate is subjected to a thermal pressing operation. The thermal pressing is carried out under a specific pressure, to further compact the thermal insulation sheet, increasing the density and mechanical strength thereof. During the pressing process, the inorganic filler particle is more tightly packed into the fiber layer under pressure, further optimizing thermal insulation properties. The pressed thermal insulation sheet is immediately cooled and sized to allow the low-melting-point adhesive fiber to solidify rapidly, maintaining the shape and structural stability of the thermal insulation sheet. The cooling process should employ an appropriate cooling rate to avoid overly fast or slow cooling, which could lead to internal stress or structural defects in the material.

Various exemplary embodiments of the present invention are further described by a list of embodiments below, which should not be construed as unduly limiting the present invention:
Specific Embodiment 1 is a thermal insulation sheet, the thermal insulation sheet comprising a laminate of a plurality of sequentially stacked fiber layers, wherein:
Each of the plurality of fiber layers comprises inorganic fibers, adhesive fibers and inorganic filler particles, the adhesive fibers being melted so as to bond at least some of the inorganic fibers and some of the the inorganic filler particles; and
the thermal insulation sheet includes a plurality of punching fixing portions penetrating through the thermal insulation sheet in a direction substantially perpendicular to a plane of the thermal insulation sheet.

Specific Embodiment 2 is the thermal insulation sheet according to any one of the preceding Specific Embodiments, wherein the inorganic fibers are selected from one or more of the group consisting of glass fibers, ceramic fibers, alumina fibers, and basalt fibers.

Specific Embodiment 3 is the thermal insulation sheet according to any one of the preceding Specific Embodiments, wherein the length of the inorganic fibers is in a range of 30-100 mm, preferably 50-100 mm, more preferably 60-100 mm, and most preferably 50-60 mm.

Specific Embodiment 4 is the thermal insulation sheet according to any one of the preceding Specific Embodiments, wherein the diameter of the inorganic fibers is in a range of 3-15 µm, preferably 3-10 µm.

Specific Embodiment 5 is the thermal insulation sheet according to any one of the preceding Specific Embodiments, wherein the thermal insulation sheet includes 20-77% by weight, preferably 30-70% by weight, of the inorganic fibers, based on the total weight of the thermal insulation sheet being 100%.

Specific Embodiment 6 is the thermal insulation sheet according to any one of the preceding Specific Embodiments, wherein the adhesive fibers are low-melting-point thermoplastic polymer fibers.

Specific Embodiment 7 is the thermal insulation sheet according to any one of the preceding Specific Embodiments, wherein the melting point of the adhesive fibers is in a range of 100-250°C, preferably 100-150°C.

Specific Embodiment 8 is the thermal insulation sheet according to any one of the preceding Specific Embodiments, wherein the diameter of the adhesive fibers is in a range of 10-50 µm.

Specific Embodiment 9 is the thermal insulation sheet according to any one of the preceding Specific Embodiments, wherein the thermal insulation sheet includes 3-20% by weight, preferably 8-10% by weight, of the adhesive fibers, based on the total weight of the thermal insulation sheet being 100%.

Specific Embodiment 10 is the thermal insulation sheet according to any one of the preceding Specific Embodiments, wherein the inorganic filler particles are selected from one or more of the group consisting of fumed silica, aerogel silica, precipitated silica, and glass microspheres.

Specific Embodiment 11 is the thermal insulation sheet according to any one of the preceding Specific Embodiments, wherein the particle size of the inorganic filler particles is in a range of 5-50 µm, preferably 7-40 µm.

Specific Embodiment 12 is the thermal insulation sheet according to any one of the preceding Specific Embodiments, wherein the thermal insulation sheet includes 20-60% by weight of the inorganic filler particles, based on the total weight of the thermal insulation sheet being 100%.

Specific Embodiment 13 is the thermal insulation sheet according to any one of the preceding Specific Embodiments, wherein,
In each of the plurality of fiber layers, at least some of the adhesive fibers are melted, so as to bond at least some of the inorganic fibers and some of the inorganic filler particles; and/or
At a boundary between two adjacent fiber layers of the plurality of fiber layers, at least some of the adhesive fibers in at least one fiber layer are melted, so as to bond at least some of the inorganic fibers and at least some of the inorganic filler particles in the adjacent fiber layer.

Specific Embodiment 14 is the thermal insulation sheet according to any one of the preceding Specific Embodiments, wherein the concentration of the inorganic filler particles at an interface of every two adjacent fiber layers of the plurality of fiber layers gradually decreases from the interface toward the interior of at least one of the two adjacent fiber layers.

Specific Embodiment 15 is the thermal insulation sheet according to any one of the preceding Specific Embodiments, wherein the density of the plurality of punched fixing portions is 300-900 per cm2.

Specific Embodiment 16 is the thermal insulation sheet according to any one of the preceding Specific Embodiments, wherein the diameter of needles used to form the plurality of punched fixing portions is in a range of 0.4-2 mm, preferably 0.5-1 mm.

Specific Embodiment 17 is the thermal insulation sheet according to any one of the preceding Specific Embodiments, wherein, in at least one particle sof the plurality of fiber layers, the inorganic fiber and the adhesive fiber are distributed in an interwoven manner. "Interwoven manner" as used in this application means the inorganic and adhesive fibers are intermixed within the same layer so they cross, entangle, and interpenetrate in one or more orientations within the nonwoven network of the fiber layer.

Specific Embodiment 18 is the thermal insulation sheet according to any one of the preceding Specific Embodiments, wherein the thermal insulation sheet comprises a laminate of 2-30, preferably 5-10, fiber layers sequentially stacked.

Specific Embodiment 19 is the thermal insulation sheet according to any one of the preceding Specific Embodiments, wherein no adhesive is present between two adjacent fiber layers in the plurality of sequentially stacked fiber layers.

Specific Embodiment 20 is the thermal insulation sheet according to any one of the preceding Specific Embodiments, wherein the thermal insulation sheet further comprises an organic encapsulation layer and/or an inorganic encapsulation layer encapsulating the laminate.

Specific Embodiment 21 is the thermal insulation sheet according to Specific Embodiment 20, wherein the organic encapsulation layer is selected from one or more of a polyethylene terephthalate layer and a polytetrafluoroethylene layer.

Specific Embodiment 22 is the thermal insulation sheet according to any of Specific Embodiments 20-21, wherein the thickness of the organic encapsulation layer is in a range of 15-100 µm.

Specific Embodiment 23 is the thermal insulation sheet according to any of Specific Embodiments 20-22, wherein the inorganic encapsulation layer is selected from one or more of glass fiber cloth and basalt fiber cloth.

Specific Embodiment 24 is the thermal insulation sheet according to any of Specific Embodiments 20-23, wherein the thickness of the inorganic encapsulation layer is in a range of 30-300 µm.

Specific Embodiment 25 is the thermal insulation sheet according to any one of the preceding Specific Embodiments, wherein the thermal insulation sheet is used in an electric vehicle battery.

Specific embodiment 26 is a method for preparing the thermal insulation sheet according to any one one of the preceding Specific Embodiments, the method comprising the following steps:
(1) Mixing, opening, and combing inorganic fibers and adhesive fibers, to form a fiber layer;
(2) spraying inorganic filler particles onto an upper surface of the fiber layer, to obtain a fiber layer loaded with the inorganic filler particle; optionally spraying the inorganic filler particles uniformly,
(3) Subjecting a plurality of the fiber layers loaded with the inorganic filler particle to cross-lapping treatment, to form a laminate;
(4) Subjecting the laminate to punching treatment, to form a punched and fixed laminate; and
(5) Subjecting the punched and fixed laminate to heat treatment, to melt the adhesive fiber.

Specific Embodiment 27 is the method for preparing the thermal insulation sheet according to Specific Embodiment 26, wherein, in step (2), after the inorganic filler particles are uniformly sprayed on the upper surface of the fiber layer, negative pressure is applied to a lower surface of the fiber layer.

Specific Embodiment 28 is the method for preparing the thermal insulation sheet according to any of Specific Embodiments 26-27, wherein the cross-lapping treatment in step (3) is carried out on a cross-lapping machine.

Specific Embodiment 29 is the method for preparing the thermal insulation sheet according to any of Specific Embodiments 26-28, wherein the punching treatment in step (4) comprises preliminary punching treatment and primary punching treatment.

Specific Embodiment 30 is the method for preparing the thermal insulation sheet according to any of Specific Embodiments 26-29, wherein, after step (5), the method further comprises:

(6) Subjecting the laminate to thermal pressing, and cooling and sizing.

Specific Embodiment 31 is the method for preparing the thermal insulation sheet according to any of Specific Embodiments 26-30, wherein the inorganic fibers are selected from one or more of the group consisting of glass fibers, ceramic fibers, alumina fibers, and basalt fibers.

Specific Embodiment 32 is the method for preparing the thermal insulation sheet according to any of Specific Embodiments 26-31, wherein the length of the inorganic fiber is in a range of 30-100 mm, preferably 50-100 mm, more preferably 60-100 mm, and most preferably 50-60 mm.

Specific Embodiment 33 is the method for preparing the thermal insulation sheet according to any of Specific Embodiments 26-32, wherein the diameter of the inorganic fibers is in a range of 3-15 µm, preferably 3-10 µm.

Specific Embodiment 34 is the method for preparing the thermal insulation sheet according to any of Specific Embodiments 26-33, wherein the thermal insulation sheet includes 20-77% by weight, preferably 30-70% by weight, of the inorganic fiber, based on the total weight of the thermal insulation sheet being 100%.

Specific Embodiment 35 is the method for preparing the thermal insulation sheet according to any of Specific Embodiments 26-34, wherein the adhesive fibers are a low-melting-point polyester fiber.

Specific Embodiment 36 is the method for preparing the thermal insulation sheet according to any of Specific Embodiments 26-35, wherein the melting point of the low-melting-point polyester fibers is in a range of 100-250°C, preferably 100-150°C.

Specific Embodiment 37 is the method for preparing the thermal insulation sheet according to any of Specific Embodiments 26-36, wherein the diameter of the adhesive fibers is in a range of 10-50 µm.

Specific Embodiment 38 is the method for preparing the thermal insulation sheet according to any of Specific Embodiments 26-37, wherein the thermal insulation sheet includes 3-20% by weight, preferably 8-10% by weight, of adhesive fibers, based on the total weight of the thermal insulation sheet being 100%.

Specific Embodiment 39 is the method for preparing the thermal insulation sheet according to any of Specific Embodiments 26-38, wherein the inorganic filler particles are selected from one or more of the group consisting of fumed silica, aerogel silica, precipitated silica, and glass microspheres.

Specific Embodiment 40 is the method for preparing the thermal insulation sheet according to any of Specific Embodiments 26-39, wherein the particle size of the inorganic filler particles is in a range of 5-50 µm, preferably 7-40 µm.

Specific Embodiment 41 is the method for preparing the thermal insulation sheet according to any of Specific Embodiments 26-40, wherein the thermal insulation sheet includes 20-60% by weight of inorganic filler particles, based on the total weight of the thermal insulation sheet as 100%.

Specific Embodiment 42 is the method for preparing thermal insulation sheet material according to any of Specific Embodiments 26-41, wherein,
In each of the plurality of fiber layers, at least some of the adhesive fibers are melted, so as to bond at least some of the inorganic fibers and at least some of the inorganic filler particles; and/or
At a boundary between two adjacent fiber layers of the plurality of fiber layers, at least some of the adhesive fibers in one fiber layer are melted, so as to bond at least some of the inorganic fibers and at least some of the inorganic filler particles in the adjacent fiber layer.

Specific Embodiment 43 is the method for preparing the thermal insulation sheet according to any of Specific Embodiments 26-42, wherein the concentration of the inorganic filler particles at an interface of every two adjacent fiber layers of the plurality of fiber layers gradually decreases from the interface toward the interior of at least one of the two adjacent fiber layers.

Specific Embodiment 44 is the method for preparing the thermal insulation sheet according to any of Specific Embodiments 26-43, wherein the density of the plurality of punched fixing portions is 300-900 per cm2.

Specific Embodiment 45 is the method for preparing the thermal insulation sheet according to any of Specific Embodiments 26-44, wherein the diameter of needles used to form the plurality of punched fixing portions is in a range of 0.4-2 mm, preferably 0.5-1 mm.

Specific Embodiment 46 is the method for preparing the thermal insulation sheet according to any of Specific Embodiments 26-45, wherein, in each of the plurality of fiber layers, the inorganic fiber and the adhesive fiber are distributed in an interwoven manner.

Compared with existing thermal insulation sheets for batteries, the thermal insulation sheet according to the present invention has the following advantages:
1. Better compressibility and resilience: The thermal insulation sheet of the present invention provides excellent compressibility and resilience by means of the multi-layer fiber structure and the punching fixing process. This structure allows the thermal insulation sheet to better recover an original shape after being compressed, thus effectively adapting to expansion of a battery during charging, and preventing deformation of an internal structure of a battery module.
2. Enhanced mechanical properties: The mechanical strength of the thermal insulation sheet is significantly improved by means of the punching process and the use of the adhesive fiber. The punched fixing portions not only strengthen connection between the fiber layers, but also form a fiber orientation perpendicular to the plane of the thermal insulation sheet. The punched fixing portions, like support columns, provide additional support, allowing the thermal insulation sheet to be less prone to breakage or damage during use.
3. Uniform thermal insulation properties: The thermal insulation sheet of the present invention achieves uniform thermal insulation effects by means of uniformly distributing the inorganic filler particle (such as fumed silica, aerogel silica, etc.) in the fiber layers, and causing the inorganic filler particle to gradually penetrate into the interiors of the fiber layers. This structural design effectively prevents heat transfer, improving the stability and reliability of thermal insulation properties.
4. Structural flexibility and adjustability: The multi-layer fiber structure design allows the thermal insulation sheet to be flexibly adjusted in terms of thermal insulation properties and mechanical properties by changing parameters such as the number and thickness of the fiber layers and the content of the inorganic filler particle, so as to meet requirements of different application scenarios.
5. Good thermal stability: The low-melting-point polyester fiber as the adhesive fiber has a melting point in the range of 100-250°C, and can melt and bond the inorganic fiber and the inorganic filler particle at an appropriate heat treatment temperature to form a stable structure, while ensuring the thermal stability of the thermal insulation sheet in high-temperature environments.
6. Ease of processing and manufacture: The preparation method of the present invention includes steps such as mixing, opening, combing, spraying the inorganic filler particle, cross-lapping, punching treatment, and heat treatment. These processes are relatively mature and easy to control, and are conducive to large-scale production and quality assurance of the thermal insulation sheet.

The present invention will be described in more detail below with reference to following embodiments and examples. It should be pointed out that these descriptions and examples are for the purpose of facilitating the understanding of the present invention, rather than limiting the present invention. The scope of protection of the present invention is subject to the appended claims.

### Examples

**In** the present invention, unless otherwise indicated, reagents used are all commercially available products, which are used directly without further purification. In addition, the "%" mentioned refers to "weight %", and the "parts" mentioned refers to "parts by weight".

### Performance test

According to methods described in detail below, thermal insulation sheet samples prepared in the following examples and comparative examples were tested for thermal insulation properties, resilience properties, and mechanical strength (tensile strength).

### Thermal insulation properties test

The thermal insulation properties test was intended to evaluate thermal insulation effects of a thermal insulation sheet in a simulated electric vehicle battery operating environment. The thermal insulation properties test was conducted according to the following steps.

Specifically, a sample having a size of 50 mm × 50 mm was cut from a sample sheet using a die, the sample being at least 25 mm away from an edge of the sample sheet. Or a finished product could be used directly. 50 µm-thick PET films were placed on top and bottom surfaces of the sample, to simulate an organic film material used in actual packaging.

Then, surfaces of a heating plate and a collecting end were cleaned, to make them clean and glossy. Afterwards, a cold plate was placed as close to a hot plate as possible, and was pressed down at 100 N at a speed of 2 mm/min. This point was defined as a zero displacement point. After the zero displacement point was defined, the cold plate and the hot plate were returned to an initial distance D1, which was 320 mm.

The sample covered with the upper and lower films was fixed on a collecting surface of the cold end. The temperature of the hot plate was raised to 600 liters, and a pressure device compressed at 10 N at a speed of 800 mm/min. At this point, a temperature value T1 of the cold plate was collected. Then the pressure device compressed to 0.9 MPa at a rate of 4 mm/min and held for 300 seconds, and the pressure was then released to 0.03 MPa at a rate of 4 mm/min. The pressure of 0.03 MPa was maintained for 900 seconds, and cold surface temperatures T2 during the period were recorded. Thermal insulation properties of the thermal insulation sheet sample were determined according to a temperature difference (T2 - T1).

For use as a thermal insulation sheet in an electric vehicle battery, when the basis weight of the thermal insulation sheet is 300 g/cm2, the temperature difference (°C) measured above needs to be less than or equal to 300°C; when the basis weight of the thermal insulation sheet is 450 g/cm2, the temperature difference (°C) measured above needs to be less than or equal to 200°C; when the basis weight of the thermal insulation sheet is 600 g/cm2, the temperature difference (°C) measured above needs to be less than or equal to 180°C.

### Rebound performance (rebound percentage) test

The rebound performance (rebound percentage) test was carried out according to the following steps.

Specifically, a 50 mm × 50 mm sample was cut from a sample sheet using a die. The sample was placed on a measuring stage. The surface of the measuring stage was flat and smooth, ensuring that the sample could make good contact with the entire surface thereof.

A press was slowly lowered at a speed of 4 mm/min and pressed evenly on the sample. When a pressure value reached 4.9 kPa, a thickness value T1 was recorded and used as an initial value.

The sample was further slowly pressed down until the pressure value was 1 MPa, at which a pressure plate was slowly released at a speed of 4 mm/min.

When a pressure on the pressure plate dropped to 4.9 kPa, a thickness value at this point was recorded as T2. A rebound percentage was calculated using the following formula: $Resilience R = \left(T2/T1\right) \times 100 %$

For use as a thermal insulation sheet in an electric vehicle battery, when the basis weight of the thermal insulation sheet is 300 g/cm2, the rebound percentage measured above needs to be greater than or equal to 50%; when the basis weight of the thermal insulation sheet is 450 g/cm2, the rebound percentage measured above needs to be greater than or equal to 40%; when the weight of the thermal insulation sheet was 600 g/cm2, the rebound percentage measured above needs to be greater than or equal to 30%.

### Mechanical strength (tensile strength) test

The mechanical strength (tensile strength) test was carried out according to ASTM-5035.

Specifically, a 50 mm × 200 mm sample was cut from a sample sheet using a die, the sample being at least 25 mm away from an edge of the sample sheet. Then, two 50 mm-wide sides of the sample were clamped using a clamp of a tensioning device (Instron). A stretching speed was set to 304 mm/min, the tensioning device was started, to stretch the sample until the sample was torn, and a maximum tensile force during the stretching process (units: N/mm) was recorded.

For use as a thermal insulation sheet in an electric vehicle battery, the tensile strength measured above needs to be greater than or equal to 2.5 N/mm.

### Example 1 (E1)

Inorganic fibers (glass fibers, 51 mm in length and 10 µm in diameter) were mixed with adhesive fibers (ES2080 manufactured by Huvis, with a melting point of 115°C) to ensure uniform mixing of the two fibers. After mixing, an opening operation was performed to disperse fiber bundles into single fibers, increasing the bulkiness and softness of the fibers. The opened fiber mixture was combed by means of a combing device, to further straighten and arrange the fibers into thin monofilaments. During the combing process, the fibers gradually formed an interwoven distribution, and the areal density of the combed fiber layer was controlled at 10-20 g/m².

Then, fumed silica (with a specific surface area of 300 g/cm2) was evenly sprayed onto a surface of the combed fiber layer, to ensure uniform particle distribution and avoid local accumulation or voids. After spraying, negative pressure (-1 bar to 0.2 bar) was applied to a lower surface of the fiber layer, so that the inorganic filler particles penetrated deeper into fiber layer gaps under a pressure differential, thereby improving a filling rate and distribution uniformity, and reducing a risk of shedding.

Subsequently, the fiber layer loaded with the inorganic filler particles was transported to a cross-lapping machine (from Zhengzhou Textile Machinery Co., Ltd.) by means of a clamping device, where a plurality of fiber layers were cross-lapped to form a laminate having a multi-layered structure. During this process, a lapping angle and position of each fiber layer were controlled so that the fiber layers were interwoven to form a complex three-dimensional network structure, thereby enhancing the overall strength and stability of the thermal insulation sheet. The basis weight and thickness of the thermal insulation sheet could be controlled by adjusting the number of fiber layers laid and the areal density of each layer.

Then, the laminate was subjected to punching treatment. The punching treatment comprised preliminary punching treatment and primary punching treatment.

The punched laminate was subjected to heat treatment at 120-180°C for 5-10 minutes, to melt the adhesive fibers. During the heat treatment process, the adhesive fibers melted, flowed, and filled gaps between the inorganic fibers and the inorganic filler particles, and solidified after cooling, firmly bonding the inorganic fibers and the inorganic filler particles together. Then, the heat-treated laminate was subjected to a thermal pressing operation, to further compact the thermal insulation sheet to increase the density and mechanical strength thereof, and the inorganic filler particles filled the fiber layers more tightly under pressure, thus optimizing thermal insulation properties. After pressing, the laminate was immediately cooled and sized, to allow the low-melting-point adhesive fibers to solidify rapidly, maintaining the shape and structural stability of the thermal insulation sheet, thus obtaining a thermal insulation sheet 1.

In the thermal insulation sheet 1 obtained, based on the total weight of the thermal insulation sheet 1 being 100%, the thermal insulation sheet 1 included 70% by weight of the glass fibers, 10% by weight of the adhesive fibers ES2080, and 20% by weight of the fumed silica. The thermal insulation sheet 1 had a basis weight of 300 g/cm² and a thickness of 1.8 mm.

The thermal insulation sheet 1 was characterized according to the thermal insulation properties, resilience properties, and mechanical strength (tensile strength) test methods described in detail above, and results were recorded in Table 1 below.

### Examples 2-17 (E2-E17) and Comparative Examples 1-3 (CE1-CE3)

Examples 2-17 (E2-E17) and Comparative Examples 1-3 (CE1-CE3) were carried out using the same process as that of Example 1, to prepare thermal insulation sheets 2-17 and comparative thermal insulation sheets 1-3, the only difference being that the contents of glass fiber, adhesive fiber ES2080 and fumed silica, as well as the basis weights and thicknesses of the resulting thermal insulation sheets, were adjusted as shown in Table 1.

The thermal insulation sheets 2-17 and the comparative thermal insulation sheets 1-3 were characterized according to the thermal insulation properties, resilience properties, and mechanical strength (tensile strength) test methods described in detail above, and results were recorded in Table 1 below.

**Table 1. Composition and property characterization results of the thermal insulation sheets in Examples 1-17 (E1-E17) and Comparative Examples 1-3 (CE1-CE3)**

| | Thermal insulation sheet | | | | | | Performance test results | | |
|---|---|---|---|---|---|---|---|---|---|
| | Grammage (g/cm²) | Thickness (mm) | Punching density (per cm²) | Glass fiber (wt%) | ES2080 (wt%) | Fumed silica (%) | Thermal insulation properties (°C) | Rebound percentage (%) | Tensile strength (N/mm) |
| E1 | 300 | 1.8 | 600 | 70 | 10 | 20% | 265 | 75.3 | 2.8 |
| E2 | 300 | 1.8 | 600 | 50 | 10 | 40% | 245 | 65.6 | 2.7 |
| E3 | 300 | 1.7 | 600 | 32 | 8 | 60% | 212 | 55.6 | 2.5 |
| E4 | 450 | 2.3 | 600 | 70 | 10 | 20% | 195 | 68.4 | 3.1 |
| E5 | 450 | 2.5 | 600 | 50 | 10 | 40% | 175 | 57.2 | 3.0 |
| E6 | 450 | 2.6 | 600 | 32 | 8 | 60% | 143 | 43.6 | 2.9 |
| E7 | 600 | 2.98 | 600 | 70 | 10 | 20% | 175 | 63.2 | 3.6 |
| E8 | 600 | 2.85 | 600 | 50 | 10 | 40% | 142 | 47.3 | 3.4 |
| E9 | 600 | 2.7 | 600 | 32 | 8 | 60% | 131 | 35.2 | 3.3 |
| E10 | 615 | 2.87 | 300 | 50 | 10 | 40% | 143 | 58.5 | 2.8 |
| E11 | 618 | 2.51 | 600 | 50 | 10 | 40% | 141 | 45.7 | 3.2 |
| E12 | 612 | 2.42 | 900 | 50 | 10 | 40% | 145 | 34.6 | 3.7 |
| E13 | 900 | 3.82 | 600 | 50 | 10 | 40% | 105 | 32.3 | 3.9 |
| E14 | 600 | 2.86 | 600 | 57 | 3 | 40 | 138 | 41.7 | 2.8 |
| E15 | 600 | 2.74 | 600 | 40 | 20 | 40 | 164 | 48.2 | 3.7 |
| E16 | 600 | 2.41 | 600 | 20 | 20 | 60 | 144 | 36.2 | 2.5 |
| E17 | 600 | 2.93 | 600 | 77 | 3 | 20 | 169 | 45.2 | 3.1 |
| CE1 | 600 | 2.98 | 600 | 75 | 15 | 10% | 195 | 66.5 | 2.9 |
| CE2 | 600 | 2.98 | 600 | 70 | 15 | 15% | 186 | 60.7 | 2.8 |
| CE3 | 600 | 2.98 | 200 | 70 | 10 | 20% | 174 | 50.6 | 2.1 |

As demonstrated by the results of Examples 1-17 (E1-E17) in Table 1, the thermal insulation sheet according to the technical solution of the present invention had good compression resilience properties, thermal insulation properties and tensile strength, and can be used for thermal insulation protection applications of electric vehicle batteries.

Example 7 (E7) was carried out in a similar manner to Comparative Example 1 (CE1) and Comparative Example 2 (CE2), except that the thermal insulation sheets of Comparative Example 1 (CE1) and Comparative Example 2 (CE2) included a smaller amount (i.e., 10% in Comparative Example 1 and 15% in Comparative Example 2) of fumed silica. The results of Comparative Example 1 and Comparative Example 2 show that the temperature difference used to characterize the thermal insulation properties exceeded 180°C, which does not meet basic requirements for thermal insulation protection for electric vehicle batteries.

Example 7 (E7) was carried out in a similar manner to Comparative Example 3 (CE3), the only difference being that the punching density of the thermal insulation sheet in Comparative Example 3 (CE3) was lower (200 per cm2). The results of Comparative Example 3 show that the tensile strength (i.e., 2.1 N/mm) of the thermal insulation sheet of Comparative Example 3 was less than 2.5 N/mm, which does not meet basic requirements for mechanical strength for use in electric vehicle batteries.

It will be apparent to those skilled in the art that various modifications and variations can be made to the present disclosure without departing from the spirit and scope of the present disclosure. Thus, if these modifications and variations of the present disclosure fall within the scope of the claims of the present invention and its equivalent techniques, the present disclosure intends to include these modifications and variations.

## Claims

1. A thermal insulation sheet, the thermal insulation sheet comprising a laminate of a plurality of sequentially stacked fiber layers, wherein:
each of the plurality of fiber layers comprises inorganic fibers, adhesive fibers, and inorganic filler particles, at least some of the adhesive fiber being melted so as to bond at least some inorganic fibers and to some of the inorganic filler particles; and
the thermal insulation sheet comprises a plurality of punching fixing portions penetrating through the thermal insulation sheet in a direction substantially perpendicular to a plane of the thermal insulation sheet.

2. The thermal insulation sheet according to claim 1, wherein the inorganic fibers are selected from one or more of a group consisting of glass fibers, ceramic fibers, alumina fibers, and/or basalt fibers.

3. The thermal insulation sheet according to any one of the preceding claims, wherein the length of the inorganic fibers is in a range of 30-100 mm.

4. The thermal insulation sheet according to any one of the preceding claims, wherein the diameter of the inorganic fibers is in a range of 3-15 µm.

5. The thermal insulation sheet according to any one of the preceding claims, wherein the thermal insulation sheet comprises 20-77% by weight of inorganic fibers, based on the total weight of the thermal insulation sheet being 100%.

6. The thermal insulation sheet according to any one of the preceding claims, wherein the melting point of the adhesive fibers is in a range of 100-250°C.

7. The thermal insulation sheet according to any one of the preceding claims, wherein the thermal insulation sheet comprises 3-20% by weight of adhesive fibers, based on the total weight of the thermal insulation sheet being 100%.

8. The thermal insulation sheet according to any one of the preceding claims, wherein the inorganic filler particles are selected from one or more of a group consisting of fumed silica, aerogel silica, precipitated silica, and/or glass microspheres.

9. The thermal insulation sheet according to any one of the preceding claims, wherein:
in each of the plurality of fiber layers, at least some of the adhesive fiber are melted, so as to bond at least some of the inorganic fiber and the inorganic filler particle; and/or
at a boundary between two adjacent fiber layers of the plurality of fiber layers, at least some of the adhesive fibers in at least one fiber layer are melted, so as to bond at least some of the inorganic fibers and at least some of the inorganic filler particles in the adjacent fiber layer.

10. The thermal insulation sheet according to any one of the preceding claims, wherein, in every two adjacent fiber layers of the plurality of fiber layers, the concentration of inorganic filler particles gradually decreases from an interface between the two adjacent fiber layers toward the interior of at least one of the two adjacent fiber layers.

11. The thermal insulation sheet according to any one of the preceding claims, wherein the density of the plurality of punching fixing portions is 300-900 per cm².

12. The thermal insulation sheet according to any one of the preceding claims, wherein, in each of the plurality of fiber layers, the inorganic fiber and the adhesive fiber are distributed in an interwoven manner.

13. The thermal insulation sheet according to any one of the preceding claims, wherein the thermal insulation sheet comprises a laminate of 2-30 fiber layers sequentially stacked.

14. The thermal insulation sheet according to any one of the preceding claims, wherein the thermal insulation sheet further comprises an organic encapsulation layer and/or an inorganic encapsulation layer encapsulating the laminate.

15. A method for preparing the thermal insulation sheet according to any one of claims 1 to 14, comprising the following steps:
(1) mixing, opening, and combing inorganic fibers and adhesive fibers, to form a fiber layer;
(2) spraying inorganic filler particles onto an upper surface of the fiber layer, to obtain a fiber layer loaded with the inorganic filler particle; optionally spraying the inorganic filler particles uniformly.
(3) subjecting a plurality of the fiber layers loaded with the inorganic filler particles to cross-lapping treatment, to form a laminate;
(4) subjecting the laminate to punching treatment, to form a punched and fixed laminate; and
(5) subjecting the punched and fixed laminate to heat treatment, to melt the adhesive fiber.
